(19) Europäisches Patentamt
European Patent Office
Office européen des brevets

(11) **EP 3 872 677 A2**

(12) **EUROPEAN PATENT APPLICATION**

(43) Date of publication:
**01.09.2021 Bulletin 2021/35**

(51) Int Cl.:
***G06F 40/279*** (2020.01)      ***G06F 40/211*** (2020.01)

(21) Application number: **21179402.9**

(22) Date of filing: **15.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.12.2020 US 202017138380**

(71) Applicant: **Baidu USA LLC**
**Sunnyvale, California 94089 (US)**

(72) Inventors:
• **ZHAO, Jinxin**
  **Sunnyvale, 94089 (US)**
• **ZHANG, Liangjun**
  **Sunnyvale, 94089 (US)**

(74) Representative: **Nederlandsch Octrooibureau**
**P.O. Box 29720**
**2502 LS The Hague (NL)**

(54) **METHOD, APPARATUS, STORAGE MEDIUM AND PROGRAM FOR DETERMINING DESTINATION ON MAP**

(57)     A method, an apparatus, and a storage medium for determining a destination on a map are provided. In the method, N segments of a text are acquired (101); a recursive order of the N segments is determined (102) based on a grammatical relationship between the N segments of the text; a matching model is selected (103) for each of the N segments from multiple models based on a meaning of the segment; each of the segments is input (104) in the recursive order with an initial region of the map or an update region output by the matching model for the last segment prior to the segment in the recursive order, into the matching model of the segment; and the update region output by the matching model for the last segment in the recursive order is used (105) as the destination in the map.

**Fig. 1**

**Description**

TECHNICAL FIELD

Embodiments of the present disclosure relate generally to the field of computer technology, and more particularly, to a method, apparatus, computer-readable storage medium and program for determining a destination on a map.

BACKGROUND

In human-robot interaction, natural language is one of the most desirable forms of communication between users and robots. However, the interpretation of natural language remains an extremely hard problem for robots. One major issue is that even with the successful conversion of speech to text, there is still a considerable gap between text and its appropriate interpretation.

SUMMARY

In a first aspect, a method for determining a destination on a map is provided. The method includes: acquiring N segments of a text, where N is an integer greater than 1; determining a recursive order of the N segments based on a grammatical relationship between the N segments of the text; selecting, for each of the N segments, a matching model from a plurality of models based on a meaning of the each segment, where the matching model for each segment is configured to use an input text and an input region of the map as an input, and output an update region of the map based on the meaning of the input text and the input region; inputting, in the recursive order, each segment with an initial region of the map or an update region output by the matching model for the last segment prior to the segment in the recursive order, into the matching model of the segment; and using the update region output by the matching model for the last segment in the recursive order as the destination in the map.

In a second aspect, an apparatus for determining a destination on a map is provided. The apparatus includes one or more processors; and a storage for storing one or more programs executable by the one or more processors to cause the apparatus to perform operations including: acquiring N segments of a text, where N is an integer greater than 1; determining a recursive order of the N segments based on a grammatical relationship between the N segments of the text; selecting, for each of the N segments, a matching model from a plurality of models based on a meaning of each segment, where the matching model for the segment is configured to use an input text and an input region of the map as an input, and output an update region of the map based on the meaning of the input text and the input region; inputting, in the recursive order, each segment with an initial region of the map or an update region output by the matching model for the last segment prior to the segment in the recursive order, into the matching model of the segment; and using the update region output by the matching model for the last segment in the recursive order as the destination in the map.

In a third aspect, a non-transitory computer readable storage medium storing instructions is provided, where the instructions is executable by a processor to perform operations including: acquiring N segments of a text, where N is an integer greater than 1; determining a recursive order of the N segments based on a grammatical relationship between the N segments of the text; selecting, for each of the N segments, a matching model from a plurality of models based on a meaning of the segment, where the matching model for the segment is configured to use an input text and an input region of the map as an input, and output an update region of the map based on the meaning of the input text and the input region; inputting, in the recursive order, each segment with an initial region of the map or an update region output by the matching model for the last segment prior to the segment in the recursive order, into the matching model of the segment; and using the update region output by the matching model for the last segment in the recursive order as the destination in the map.

In a fourth aspect, a computer program comprising instructions is provided, where the instructions, when the program is executed by a processor, cause the processor to perform operations including: acquiring N segments of a text, where N is an integer greater than 1; determining a recursive order of the N segments based on a grammatical relationship between the N segments of the text; selecting, for each of the N segments, a matching model from a plurality of models based on a meaning of the segment, where the matching model for the segment is configured to use an input text and an input region of the map as an input, and output an update region of the map based on the meaning of the input text and the input region; inputting, in the recursive order, each segment with an initial region of the map or an update region output by the matching model for the last segment prior to the segment in the recursive order, into the matching model of the segment; and using the update region output by the matching model for the last segment in the recursive order as the destination in the map.

BRIEF DESCRIPTION OF THE DRAWINGS

The above and other features, advantages and aspects of the embodiments of the present disclosure will become more apparent from the following detailed description in conjunction with the accompanying drawings. In the drawings, the same or similar reference numerals denote the same or similar elements:

Fig. 1 is a flowchart of a method for determining a destination on a map according to some embodiments of the disclosure;

Fig. 2 is a schematic diagram of an implementation of determining a recursive order of segments according to some embodiments of the disclosure;

Fig. 3 is a schematic diagram of an implementation of inputting each of text segments into the matching model;

Fig. 4 is a schematic diagram of an application example of inputting each of text segments into the matching model;

Fig. 5 is a flowchart of a method for determining a destination on a map according to some other embodiments of the disclosure;

Fig. 6 is a schematic diagram of semantic illustration of update functions of a plurality of models according to some embodiments of the disclosure;

Fig. 7 is a schematic diagram of performing a computation for a text segment according to some embodiments of the disclosure;

Fig. 8 is an application scenario of a method for determining a destination on a map; and

Fig. 9 is a schematic diagram of an apparatus for determining a destination on a map according to some embodiments of the disclosure.

DETAILED DESCRIPTION OF EMBODIMENTS

The present disclosure will be further described below in detail in combination with the accompanying drawings and the embodiments. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that the embodiments in the present disclosure and the features in the embodiments may be combined with each other on a non-conflict basis. The present disclosure will be described below in detail with reference to the accompanying drawings and in combination with the embodiments.

Most of the current robot language addressing algorithms maintain a limited strategy set for a fixed scene, and establish the mapping between image or geographic information and natural language through a large amount of data training. Most of the existing technologies use the learning ability of neural network to memorize the mapping relationship between language and target location from large amount of data. This approach does not make full use of the structure of language and ignores the inference nature of destination description in natural language. Its disadvantages include the huge demand for data, the lack of universality of unrecorded language structure, and the difficulty in understanding the description of the location that needs reasoning, which causes the inconveniences of the robot control.

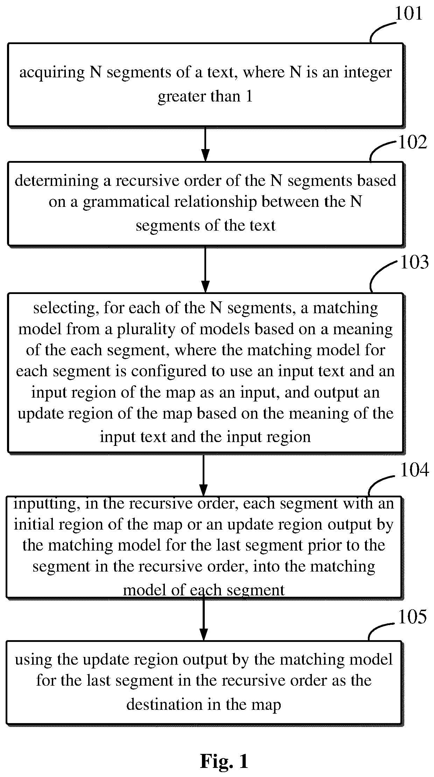

Fig. 1 is a flowchart of a method for determining a destination on a map according to some embodiments of the disclosure. The method includes steps 101 to 105.

Step 101 includes: acquiring N segments of a text, where N is an integer greater than 1.

In some embodiments, the text is acquired based on a user input. The user input may be any input receivable by a machine or a computer. In some embodiments, the user input includes at least one of a voice, an input from a keyboard, an input from a sensor, or an input from a touch screen.

In some embodiments, the N segments include a segment indicating a position and a segment indicating a position relationship.

In some embodiments, the user says "Go to the meeting room near the north exit", a voice is received by a robot, and a text "Go to the meeting room near the north exit" is acquired from the voice. In some embodiments, a semantic analysis is performed on the text to acquire a text regarding position description, e.g., "meeting room near the north exit." Then, multiple segments of the text, i.e., noun segments (e.g., "meeting room" and "the north exit") and a preposition segment(e.g., "near") are acquired.

Step 102 includes: determining a recursive order of the N segments based on a grammatical relationship between the N segments of the text.

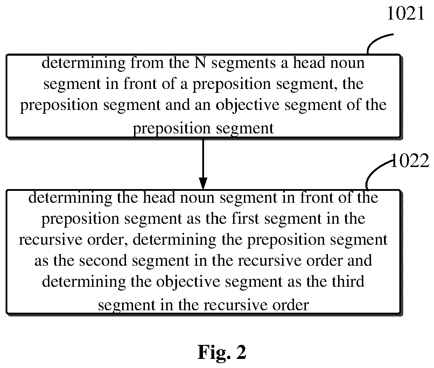

In some embodiments, step 102 includes steps 1021 and 1022, which is shown in Fig. 2. Step 1021 includes determining from the N segments a head noun segment in front of a preposition segment, the preposition segment and an objective segment of the preposition segment.

In some embodiments, a natural language processing (NLP) tool is used to parse the text into a dependency structure with head words $u_h$, prepositions $u_{prep}$, and objective of preposition $u_{pobj}$.

Step 1022 includes: determining the head noun segment in front of the preposition segment as the first segment in the recursive order, determining the preposition segment as the second segment in the recursive order and determining the objective segment as the third segment in the recursive order.

Step 103 includes: selecting, for each of the N segments, a matching model from a plurality of models based on a meaning of the each segment, where the matching model for each segment is configured to use an input text and an input region of the map as an input, and output an update region of the map based on the meaning of the input text and the input region.

In some embodiments, the plurality of models includes a first-type model and a second-type model, where the first-type model is configured to use a first map region and a first-type text indicating the position as an input, and output a first update region within the first map region, where the second-type model is configured to use a second map region and a second-type text indicating a position relationship as an input, and output a second update region based on the second map region and the position relationship.

In some embodiments, the position relationship include a proximity relationship, and the second-type model includes a proximity-model configured to use the second map region and a second-type text indicating the proximity relationship as the input, and output the second update region in proximity to the second map region.

In some embodiments, the position relationship includes a directional relationship, and the second-type model includes a directional-model configured to use the second map region and a second-type text indicating the directional relationship as the input, and output the second update region in a direction of the second map region.

In some embodiments, the models matching the noun segment in front of the preposition segment, the preposition segment and the objective noun segment can use the following equations respectively:

$$b_{pobj} = f_\theta^h\left(u_{pobj}, b_0\right) \qquad (1)$$

$$b_{prep} = f_\theta^{preph}\left(u_{prep}, b_{pobj}\right) \qquad (2)$$

$$b_h = f_\theta^h(u_h, prep) \qquad (3)$$

where $f_\theta^*$ represents grounding functions with $\theta$ as parameters, $b_0$ represents the dummy belief or an initial distribution spanning the whole map m. In some embodiments, Eq. (1) and Eq. (3) shares the same function.

Step 104 includes: inputting, in the recursive order, each segment with an initial region of the map or an update region output by the matching model for the last segment prior to the segment in the recursive order, into the matching model of each segment.

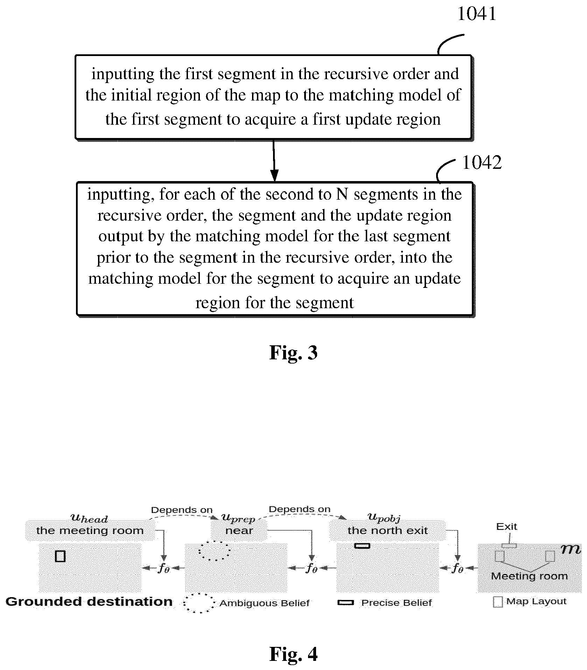

In some embodiments, step 104 includes step 1041 and step 1042, which is shown in Fig. 3.

Step 1041 includes inputting the first segment in the recursive order and the initial region of the map to the matching model of the first segment to acquire a first update region.

Step 1042 includes inputting, for each of the second to N segments in the recursive order, the segment and the update region output by the matching model for the last segment prior to the segment in the recursive order, into the matching model for the segment to acquire an update region for the segment.

Fig. 4 shows an application example of step 104. In Fig. 4, a first segment "the north exit" is inputted with an initial region of map to the first model as defined in equation (1). Then a second segment "near" is inputted with the output of the first model to the second model as defined in equation (2). Finally, a third segment "the meeting room" is inputted with the output of the second model to the third model as defined in equation (3).

Step 105 includes: using the update region output by the matching model for the last segment in the recursive order as the destination in the map.

In some embodiments, the output of the third model in Fig. 4 is used as the destination. In some embodiments, coordinates of the map is determined by the robot based on the destination on the map, then the robot plans a path from a current position of the robot to the coordinates of the map, and move along the planned path.

The method according to some embodiments of the disclosure makes maximum use of the structural features of natural language, decomposes the complete addressing task into several independent language understanding tasks according to the instruction structure, and transmits the extracted information in the form of probability distribution. In the initial state, the target probability is evenly distributed in the whole map range. The probability distribution is understood and updated one by one through independent language, and points to the final target location.

The method according to some embodiments of the disclosure has the characteristics of being interpretable, easy to optimize and requiring less data. With the method according to some embodiments of the disclosure, coordinates of a destination in a map can be easily determined by a robot based on an input of a user, thus the user is assisted in controlling the robot.

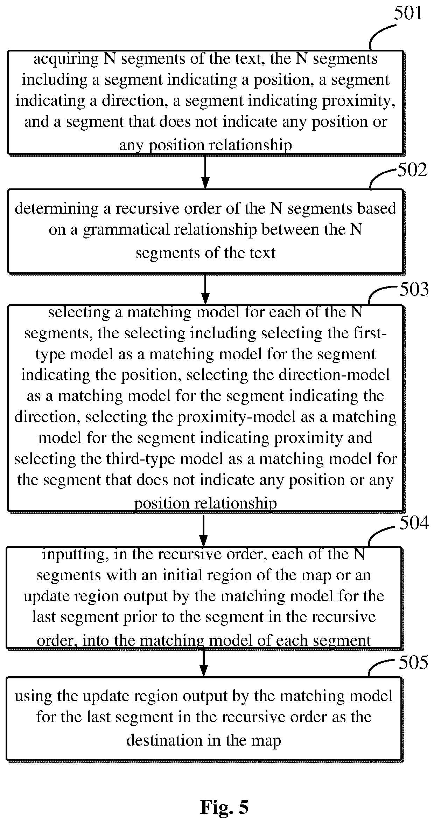

Fig. 5 is a flowchart of a method for determining a destination on a map according to some other embodiments of the disclosure. The method includes steps 501 to 505.

Step 501 includes acquiring N segments of the text, the N segments including a segment indicating a position, a segment indicating a direction, a segment indicating proximity, and a segment that does not indicate any position or any position relationship.

Step 502 includes determining a recursive order of the N segments based on a grammatical relationship between the N segments of the text. Step 502 is the same as step 102, and relevant descriptions may be referred to descriptions of step 102.

Step 503 includes selecting a matching model for each of the N segments, the selecting including selecting the first-type model as the matching model for the segment indicating the position, selecting the direction-model as a matching model for the segment indicating the direction, selecting the proximity-model as a matching model for the segment indicating proximity and selecting the third-type model as a matching model for the segment that does not indicate any position or any position relationship.

In following descriptions of the disclosure, the segments of the text are also referred as modifiers, and the input and output of the model are also referred to as prior and posterior respectively. Table I shows an example of first-type model (i.e., precise model), proximity model, directional model, and the third-type model (i.e., dummy model), and their available inputs, outputs and rules according to some embodiments.

TABLE I

UPDATE TYPES

| Update Type $t$ | Example Modifers | Applicable Prior | Posterior Type | Update Rule |
|---|---|---|---|---|
| Dummy | "to", "of" | Precise/ Ambiguous | Same as prior | Identity mapping |
| Proximity | "near", "besides", "close to" | Precise | Ambiguous | Locations near prior |
| Precise | "an working area", "the north meeting room" | Ambiguous | Precise | A specific area within prior |
| Directional | "the north", "the south west" | Precise | Ambiguous | Locations within a certain orientation |

In some embodiments, Equations (1) to (3) are unified and viewed as a chain of general belief updates as:

$$\begin{cases} b_k = f_\theta \left( u_k, b_{k-1} \right) \\ b_{k-1} = f_\theta \left( u_{k-1}, b_{k-2} \right) \\ \quad ... \\ b_1 = f_\theta \left( u_1, b_0 \right) \end{cases} \quad (4)$$

or

$$b_k = f_\theta \left( u_k, ... f_\theta \left( u_2, f_\theta \left( u_1, \ b_0 \right) \right) \right) ... \right) \quad (5)$$

where k refers to the total number of $u_{pobj}$ and $u_{prep}$. In some embodiments, the text is decomposed into a sequence of grammatically associated segments ($u_k$) and recursively apply each of them to update a notion of belief b.

In some embodiments, a set of learnable functions $\{f_\theta^t : \mathcal{U} \times \mathcal{B} \to \mathcal{B}\},$

$$\forall t \in \mathcal{T}$$

and a classifier

$$c : \mathcal{U} \to \mathcal{T}$$

are constructed. The update function in equation (4) can be written as

$$b_k = f_\theta(u_k, b_{k-1}) = \sum_{t \in \mathcal{T}} \mathbb{I}(c(u_k) = t) f_\theta^t(u_k, b_{k-1})$$

$$(6)$$

where $\mathbb{I}(\cdot)$ is the indicator function. The classifier c is represented as a neural network, defined as follows:

$$c(u_k) = \underset{t}{argmax} \; softmax(W_c^\top \Phi_c(u_k))$$

$$(7)$$

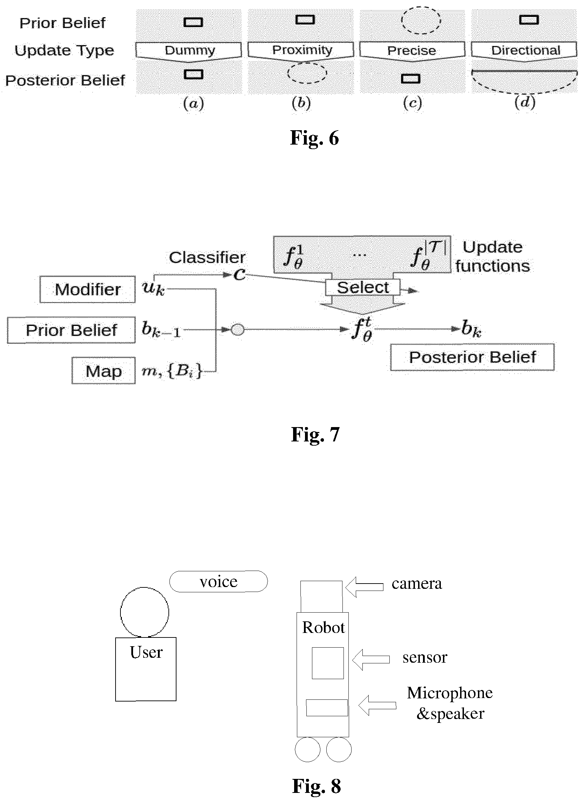

where $\Phi_c$ represents the hidden state extraction by a gated recurrent unit (GRU) layer, and $W_c$ refers to the weights of a linear layer that maps the GRU hidden state to raw classification weights. Fig. 6 shows semantic illustration of update functions of a plurality of models according to some embodiments of the disclosure. The update functions of the precise model, directional model, proximity model and dummy mode are described as follows.

Precise model

In some embodiments, the map $m \in M$ is segmented into a set of areas of interest $\{a_i\}_{i=1}^{S}$, each having boundary $B_i$ within the map boundary $B_0$. Each area $a_i$ is associated with a tuple of strings that are commonly mentioned, such as unique area id, area category, and area name if applicable, and at most N words are assigned to each area of interest.

In some embodiments, each word in the area information is converted to fixed length embeddings and then the length embeddings are concatenated. The result is a matrix representation of the map information, denoted by

$$\bar{m} \in \mathbb{R}^{S \times N \times H}$$

. S is the number of area of interest. N refers to the number of tokens in area descriptors. H is the dimension of word embedding. In some embodiments, the modifier $u_k$ is encoded as an embedding matrix

$$\bar{u}_k \in \mathbb{R}^{N \times H}$$

. In some embodiments, the precise model is formed as a S-level classification problem which generates a discrete distribution $w_k$ defined on all areas in the map. The calculation for each area $a_i$ is as follows:

$$w_k(i) = \frac{1}{\eta} \gamma_k(i) \cdot \bar{w}_k(i) \cdot w_{k-1}(i)$$

$$(8)$$

where $\gamma_k$, $\bar{w}_k$, and $w_{k-1}$ represent directional scaling factor, modifier-map attention, and prior weights as explained as follows, $\eta$ refers to normalization factor. The full belief $b_k$ can then be recovered by assigning $w_k(i)$ to the area on the map indicated by boundary $B_i$, and then normalizing across the whole map.

The use of $\gamma_k$ is triggered by the common use of directions as adjective of the head word (see Table. I). The equation is as follows:

$$\gamma_k(i) = (\sigma(x_i^\top e_{\alpha_k} - \min_{x \in B_0} x^\top e_{\alpha_k}) + 1)^{\kappa_k} - 1 + \beta_k \kappa_k + \epsilon \quad (9)$$

where $\sigma$ is the sigmoid function, $x_i$ is the centroid of area $a_i$, $B_0$ is the boundary of the map, $e_{\alpha k}$ is the unit directional vector of the predicted direction $\alpha_k \in [-\pi, n)$, $\kappa_k \in [0, 1]$ is a trainable variable indicating whether a direction is used in $u_k$, $\beta_k$ is a shaping factor adjusting the scaling power of $\gamma_k$, and $\varepsilon$ is a positive constant. When a directional adjective is used, $\kappa_k$ is labeled as 1, rendering $\gamma_k$ in an exponential form that weighs each area $a_i$ according to the projection of their centroids along a predicted direction. $\beta_k$ is added as an offset to provide additional flexibility. When no directional adjective is involved, $\kappa_k$ is labeled as 0 and pushes $\gamma_k(i)$ to $\varepsilon$ for all $a_i$, effectively cancelling this discriminative term. All terms in Eq. (9) except $x_i$ and $b_i$ are shared by all area weights and calculated by learnable functions as

$$\begin{cases} \alpha_k &= tanh(W_\alpha^\top \Phi_\alpha(u_k)) \cdot \pi \\ \kappa_k &= \sigma(W_\kappa^\top \Phi_\kappa(u_k)) \\ \beta_k &= exp(W_\beta^\top \Phi_\kappa(u_k)) \end{cases} \quad (10)$$

where $\Phi^*$ represents the hidden state extracted by GRU layers and $W^*$ are the weights of linear layers that generate scalar outputs.

The attention term $\overline{w}_k(i)$ in Eq. (8) is as follows:

$$\overline{w}_k(i) = \frac{1}{\overline{\eta}} \sum_{j,l=1}^{N,N} \mathbb{I}(\overline{m}_{ij}^\top \overline{u}_{kl} > \lambda) \quad (11)$$

where $\overline{\eta}$ is the normalization factor, $\overline{m}_{ij}$ refers to the $j^{th}$ word embedding assigned to area $a_i$, and $\overline{u}_{kl}$ refers to the $l^{th}$ word embedding in modifier $\overline{u}_k$. This term weighs each area $a_i$ by counting the matching word pairs between pre-defined area information and modifier $u_k$. Word matching is examined by filtering normalized embedding dot products by threshold $\lambda$.

Finally, the area prior $w_{k-1}(i)$ is calculated by gathering the weights of each area $a_i$ from prior belief as follows

$$w_{k-1}(i) = \frac{1}{\eta_{k-1}} \sum_{u,v \in b_i} b_{k-1}(u, v) \quad (12)$$

where u, v refers to map coordinates and $\eta_{k-1}$ is the normalization factor.

Proximity model

When encountering prepositions referring to proximity relation, the posterior is represented as a Gaussian distribution centered at the prior and assign a variance proportional to the prior area size. The update function is then written as

$$b_k = f_\theta^t(u_k, b_{k-1}) = \mathcal{N}(x_{k-1}, diag(\rho|B_{k-1}|, \rho|B_{k-1}|)) \quad (13)$$

where $x_{k-1}$ and $|B_{k-1}|$ are the centroid coordinate and size of the area indicated by prior $b_{k-1}$, and $\rho$ is a scaling constant.

Directional model

Besides being used as an adjective, direction words (e.g., " north ") can also be directly used as head words, e.g., "the north of meeting room 202." In some embodiments, a Gaussian distribution is used to represent the prior, but the distribution is set with an additional mask that only preserves the belief consistent with $u_k$. See Fig. 6 for a graphical illustration. The update function can be written as

$$b_k = f_\theta^t(u_k, b_{k-1}) = \mathcal{N}_{k-1} \mid cos(x - x_{k-1}, e_{\alpha_k}) > 0 \qquad (14)$$

where $e_{\alpha k}$ is the unit direction vector of the valid direction $\alpha_k$. $N_{k-1}$ takes the same form as in Eq. (13) . Cos ($\cdot$, $\cdot$) is the cosine similarity. In some embodiments, $\alpha_k$ is represented as a learnable variable similarly to Eq. 10 as

$$\alpha_k = tanh(W_\alpha^\top \Phi_\alpha(u_k)) \cdot \pi \qquad (15)$$

Dummy model

In some embodiments, the function of the dummy model is an identical mapping.

In some embodiments, the learnable functions are trained by minimizing type-specific losses through back-propagation. In some embodiments, the map used for training is a floor plane of an office consisting of general working areas, meeting rooms and designated areas such as entertainment area. In some embodiments, besides reusing existing spatial structures such as rooms and designated areas, general common spaces such as corridors are also segmented. In some embodiments, the whole map is segmented into 80 areas with assigned attributes. See Table II for summarized area attributes.

TABLE II

| AREA ATTRIBUTES AND MODIFIER DICTIONARY | | | |
|---|---|---|---|
| Attribute | Examples | Modifier | Examples |
| id | "100", "201" | Dummy | "to", "of" |
| category | room, area, exit | Proximity | "besides", "near" |
| sub-category | meeting/phone (room) | Direction | "south", "north east" |
| name | "yosemite" | | |

For each update type t, K = 10 modifiers u are randomly generated according to predefined dictionary (see Table. II) and each area $a_i$ is taken as the key area.

In some embodiments, 3200 update samples are used for training. The procedure to generate essential training sample for each update function is described as below.

For the dummy model, prior and posterior believes are omitted and each training sample is a singleton ($u_k$) with type label t* = 0.

For a proximity model: the prior $b_0$ is uniformly distributed within the key area, and the posterior $b_1$ is a Gaussian centered at the key area with standard deviation proportional to key area size. Each training sample is a tuple ($b_0$, $b_1$, $u_k$) with type label t* =1.

For the directional model: the prior $b_0$ is uniformly distributed within the key area, a direction angle $\alpha_k$ is sampled from uniform[$-\pi$, $\pi$), and the posterior $b_1$ is generated by taking the Gaussian similar to that in proximity update, but with half of it masked out using a dividing line perpendicular to the direction represented by $\alpha_k$. Finally, the modifier $u_k$ is determined based on $\alpha_k$. Each training sample is a tuple ($b_0$, $b_1$, $u_k$, $\alpha_k$) with type label t* = 2.

For the precise model: the prior $b_0$ is first randomly generated as the output of proximity or directional update based on the key area. Then, map locations are sampled from $b_0$ and the top two areas $a_1$, $a_2$ in which most of these sampled locations fall are selected. Then modifiers $u_k$ that uniquely locates $a_1$ based on a minimal rule set (see Table III, brackets indicate optional usage) are generated. Additionally, $\kappa_k$ is labeled as 1 if a direction word is used as adjective, or 0 otherwise. The posterior $b_1$ is uniformly distributed within $a_1$. Each training sample is a tuple ($b_0$, $b_1$, $u_k$, $\alpha_k$, $\kappa_k$) with type label t* = 3.

TABLE III

| MODIFIER GENERATION RULES | | |
|---|---|---|
| Condition of $a^1$, $a^2$ | Modifier template | Example |
| Different category | [sub] category | "room" |
| Different sub-category | [direction] [sub] category | "meeting room" |
| Same sub-category | direction [sub] category | "south west area" |

The update function set in Eq. (6) is trained by minimizing the total losses of all supervised terms that are applicable for each update function type. The losses are defined for all supervised terms as follows. For classifier c, cross entropy loss $L_c$ is used as

$$L_c = -log\left(softmax(W_c^\top \Phi_c(u_k))[t^*]\right) \quad ;$$

For direction $\alpha_k$, a marginal $l_2$ loss is sued as

$$L_\alpha = max\left(\|\alpha_k - \alpha_k^*\|_2 - \left(\frac{\pi}{8}\right)^2, 0\right) \quad ;$$

For indicator $\kappa_k$, cross entropy loss $L_K$ is used as

$$L_\kappa = -log\left(softmax(W_\kappa^\top \Phi_\kappa(u_k))[\kappa_k^*]\right) .$$

In some embodiments, in training phase, 10% of the data is hold as testing set and training is performed on the remaining samples. Text instructions are encoded using Bert embedding separately on each word and generate word embeddings of length H = 768. In some embodiments, GRU hidden sizes are set with 8 and optimization is performed using Adam with 1e-4 learning rate for 10 epochs.

In some embodiments, in each of the belief updates, the input is a prior-modifier tuple $(b_0, u)$. Each input tuple is paired with a ground true update type t* as well as the required output terms as described above.

Step 504 includes inputting, in the recursive order, each of the N segments with an initial region of the map or an update region output by the matching model for the last segment prior to the segment in the recursive order, into the matching model of each segment.

Fig. 7 shows a schematic diagram of performing a computation for a text segment.

Step 505 includes using the update region output by the matching model for the last segment in the recursive order as the destination in the map.

Step 505 is the same as step 105, relevant descriptions may be referred to descriptions of step 105.

Fig. 8 shows an application scenario of a method for determining a destination on a map. The user is asked by the speaker of the robot to describe the navigation commands. In response, the user says "Go to the north phone room near the entertainment area". The robot receives the voice of the user through the microphone, convert the voice into a text, then uses the method according to some embodiments of the disclose to determine a destination on a map based on the text. After determining the destination, the robot plans a path from the current position to the destination, and moves along the planed path by using the camera and sensor.

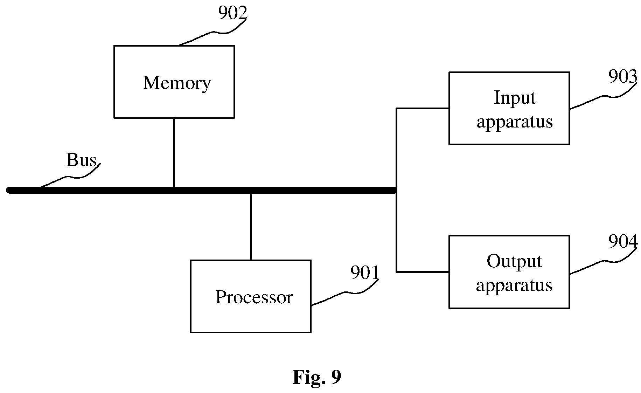

As shown in Fig. 9, the apparatus includes: one or more processors 901, a memory 902, and interfaces for connecting various components, including high-speed interfaces and low-speed interfaces. The various components are connected to each other using different buses, and may be mounted on a common motherboard or in other methods as needed. The processor may process instructions executed within the apparatus, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of apparatuses may be connected, and the apparatuses provide some necessary operations, for example, as a server array, a set of blade servers, or a multi-processor system. In Fig. 9, processor 901 is used as an example.

The memory 902 is a non-transitory computer readable storage medium provided by the present disclosure. The memory stores instructions executable by at least one processor, so that the at least one processor performs the method for determining a destination on a map according to some embodiments of disclosure. The non-transitory computer readable storage medium of the present disclosure stores computer instructions for causing a computer to perform the method for determining a destination on a map according to some embodiments of disclosure.

The memory 902, as a non-transitory computer readable storage medium, may be used to store non-transitory software programs, non-transitory computer executable programs and modules, such as program instructions/modules corresponding to the method for determining a destination on a map according to some embodiments of disclosure. The processor 901 executes the non-transitory software programs, instructions, and modules stored in the memory 902 to execute various functional applications and data processing of the server, that is, to implement the method for determining a destination on a map according to some embodiments of disclosure.

The memory 902 may include a storage program area and a storage data area, where the storage program area may store an operating system and at least one function required application program; and the storage data area may store data created by the use of the apparatus of the method for determining a destination on a map according to some embodiments of disclosure. In addition, the memory 902 may include a high-speed random access memory, and may also include a non-transitory memory, such as at least one magnetic disk storage device, a flash memory device, or other non-transitory solid-state storage devices. In some embodiments, the memory 902 may optionally include memories remotely disposed with respect to the processor 901, and these remote memories may be connected to the apparatus of the method for determining a destination on a map according to some embodiments of disclosure. Examples of the above network include but are not limited to the Internet, intranet, local area network, mobile communication network, and combinations thereof.

The apparatus performing the method for determining a destination on a map according to some embodiments of disclosure may further include: an input apparatus 903 and an output apparatus 904. The processor 901, the memory 902, the input apparatus 903, and the output apparatus 904 may be connected through a bus or in other methods. In Fig. 9, connection through the bus is used as an example.

The input apparatus 903 may receive input digital or character information, and generate key signal inputs related to user settings and function control of the apparatus of the method for learning a knowledge representation, such as touch screen, keypad, mouse, trackpad, touchpad, pointing stick, one or more mouse buttons, trackball, joystick and other input apparatuses. The output apparatus 904 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

**Claims**

1. A method for determining a destination on a map, the method comprising:

   acquiring (101) N segments of a text, wherein N is an integer greater than 1;
   determining (102) a recursive order of the N segments based on a grammatical relationship between the N segments of the text;
   selecting (103), for each of the N segments, a matching model from a plurality of models based on a meaning of the each segment, wherein the matching model for the each segment is configured to use an input text and an input region of the map as an input, and output an update region of the map based on the meaning of the input text and the input region;
   inputting (104), in the recursive order, the each segment with an initial region of the map or an update region output by the matching model for the last segment prior to the each segment in the recursive order, into the matching model of the each segment; and
   using (105) the update region output by the matching model for the last segment in the recursive order as the destination in the map.

2. The method according to claim 1, wherein the determining a recursive order of the N segments based on the grammatical relationship comprises:

   determining (1021) from the N segments a head noun segment in front of a preposition segment, the preposition segment and an objective segment of the preposition segment; and
   determining (1022) the head noun segment as the first segment in the recursive order, determining the preposition segment as the second segment in the recursive order and determining the objective segment as the third segment in the recursive order.

3. The method according to claim 1 or 2, wherein the N segments comprise a segment indicating a position and a segment indicating a position relationship;
   wherein the plurality of models comprises a first-type model and a second-type model, wherein the first-type model is configured to use a first map region and a first-type text indicating the position as an input, and output a first update region within the first map region, wherein the second-type model is configured to use a second map region and a second-type text indicating a position relationship as an input, and output a second update region based on the second map region and the position relationship;
   wherein the inputting, in the recursive order, the each segment with an initial region of the map or an update region output by the matching model for the last segment prior to the each segment in the recursive order, into the matching model of the each segment comprises:

   inputting (1041) the first segment in the recursive order and the initial region of the map to the matching model of the first segment to acquire a first update region; and
   inputting (1042), for each of the second to N segments in the recursive order, the each segment and the update region output by the matching model for the last segment prior to the each segment in the recursive order, into the matching model for the each segment to acquire an update region for the each segment.

4. The method according to claim 3, wherein the position relationship comprise a proximity relationship, and the second-type model comprises a proximity-model configured to use the second map region and a second-type text indicating the proximity relationship as the input, and output the second update region in proximity to the second map region.

5. The method according to claim 4, wherein the position relationship comprises a directional relationship, and the second-type model comprises a directional-model configured to use the second map region and a second-type text indicating the directional relationship as the input, and output the second update region in a direction of the second map region.

6. The method according to claim 5, wherein the plurality of models comprise a third-type model configured to use a third map region and a third-type text as an input, and output the third map region, wherein the third-type text does not indicate any position or any position relationship.

7. The method according to claim 6, wherein
   the acquiring N segments of the text comprises acquiring the segment indicating the position, a segment indicating a direction, a segment indicating proximity, and a segment that does not indicate any position or any position relationship;
   wherein the selecting, for each of the N segments, a matching model from a plurality of models comprising a first-type model and a second-type model based on meaning of the each segment comprises:
   selecting (503) the first-type model as the matching model for the segment indicating the position, selecting the direction-model as a matching model for the segment indicating the direction, selecting the proximity-model as a matching model for the segment indicating proximity and selecting the third-type model as a matching model for the segment that does not indicate any position or any position relationship.

8. The method according to claim 2 or 3, wherein the position relationship comprises a directional relationship, and the second-type model comprises a directional-model configured to use the second map region and a second-type text indicating the directional relationship as the input, and output the second update region in a direction of the second map region.

9. The method according to claim 2 or 3, wherein the selecting, for each of the N segments, a matching model from a plurality of models comprising a first-type model and a second-type model based on a meaning of the each segment comprises:

> determining, by a classifier, a type of the each segment based on the meaning of the each segment; and
> determining the matching model for the each N segment based on the type of the each segment and a type of the model.

10. The method according to any one of preceding claims, wherein the method further comprises:
controlling a robot to move based on the destination in the map.

11. The method according to any one of preceding claims, wherein the text is acquired based on a user input, the user input comprising at least one of a voice, an input from a keyboard, an input from a sensor, or an input from a touch screen.

12. An apparatus for determining a destination on a map, the apparatus comprising:

> one or more processors; and
> a storage for storing instructions executable by the one or more processors to cause the processors to perform the method according to any one of claims 1 to 11.

13. A non-transitory computer readable storage medium storing instructions, the instructions being executable by a processor to cause the processor to perform the method according to any one of claims 1 to 11.

14. A computer program comprising instructions which, when the program is executed by a processor, cause the processor to perform the method according to any one of claims 1 to 11.

101

acquiring N segments of a text, where N is an integer greater than 1

102

determining a recursive order of the N segments based on a grammatical relationship between the N segments of the text

103

selecting, for each of the N segments, a matching model from a plurality of models based on a meaning of the each segment, where the matching model for each segment is configured to use an input text and an input region of the map as an input, and output an update region of the map based on the meaning of the input text and the input region

104

inputting, in the recursive order, each segment with an initial region of the map or an update region output by the matching model for the last segment prior to the segment in the recursive order, into the matching model of each segment

105

using the update region output by the matching model for the last segment in the recursive order as the destination in the map

**Fig. 1**

1021

determining from the N segments a head noun segment in front of a preposition segment, the preposition segment and an objective segment of the preposition segment

1022

determining the head noun segment in front of the preposition segment as the first segment in the recursive order, determining the preposition segment as the second segment in the recursive order and determining the objective segment as the third segment in the recursive order

**Fig. 2**

1041

inputting the first segment in the recursive order and the initial region of the map to the matching model of the first segment to acquire a first update region

1042

inputting, for each of the second to N segments in the recursive order, the segment and the update region output by the matching model for the last segment prior to the segment in the recursive order, into the matching model for the segment to acquire an update region for the segment

**Fig. 3**

$u_{head}$ — Depends on → $u_{prep}$ — Depends on → $u_{pobj}$
the meeting room          near          the north exit          Exit

$m$

◄— $f_\theta$ ◄—          ◄— $f_\theta$ ◄—          ◄ $f_\theta$ ◄          Meeting room

**Grounded destination**   Ambiguous Belief   ▭ Precise Belief   ▢ Map Layout

**Fig. 4**

acquiring N segments of the text, the N segments including a segment indicating a position, a segment indicating a direction, a segment indicating proximity, and a segment that does not indicate any position or any position relationship
_501_

determining a recursive order of the N segments based on a grammatical relationship between the N segments of the text
_502_

selecting a matching model for each of the N segments, the selecting including selecting the first-type model as a matching model for the segment indicating the position, selecting the direction-model as a matching model for the segment indicating the direction, selecting the proximity-model as a matching model for the segment indicating proximity and selecting the third-type model as a matching model for the segment that does not indicate any position or any position relationship
_503_

inputting, in the recursive order, each of the N segments with an initial region of the map or an update region output by the matching model for the last segment prior to the segment in the recursive order, into the matching model of each segment
_504_

using the update region output by the matching model for the last segment in the recursive order as the destination in the map
_505_

**Fig. 5**

Fig. 6

Fig. 7

Fig. 8

**Fig. 9**